# EUROPÄISCHE PATENTSCHRIFT

(11) **EP 0 514 950 B1**
(45) Veröffentlichungstag und Bekanntmachung des Hinweises auf die Patenterteilung: **18.10.1995**
(21) Anmeldenummer: 92113077.9
(22) Anmeldetag: 08.03.1989
(51) Int. Cl.: B65G 17/06

(54) **Kurvengängiger Plattenbandförderer**
Curved track plate conveyer
Transporteur à palettes pour trajet en courbes

(30) Priorität: 28.05.1988 DE 3818231
(43) Veröffentlichungstag der Anmeldung: 25.11.1992
(62) Teilanmeldung aus: 89104060.2
(73) Patentinhaber: REXNORD KETTE GMBH & CO. KG, D-57501 Betzdorf (DE)
(72) Erfinder: Fett, Jürgen, 5239 Atzelgift (DE); Oelschläger, Karl Gerhard, 5800 Hagen (DE); Bannert, Wolfgang, 5758 Fröndenberg-Dellwig (DE)
(74) Vertreter: König, Reimar, Dr.-Ing.

(56) Entgegenhaltungen:
- DE-A- 3 046 568
- FR-A- 2 558 808
- US-A- 3 513 964

## Beschreibung

Die Erfindung betrifft einen kurvengängigen Plattenbandförderer aus mehreren, an ihren benachbarten Seitenkanten mit Scharnieraugen ineinandergreifenden und durch Scharnierbolzen miteinander verbundenen Plattengliedern, die mit Führungsschienen zusammenwirkende über einen Steg miteinander verbundene Führungsflächen aufweisen.

Bei einem aus der US-Patentschrift 3 513 964 bekannten kurvengängigen Plattenbandförderer dieser Art übernehmen unter die einzelnen metallischen Plattenglieder geschweißte, parallel zur Längsachse des Förderers verlaufende, mittels eines Stegs miteinander verbundene Führungsflächen das Führen des Bandförderers auf seiner kurvigen Wegstrecke. Die Führungsflächen sind dazu geneigt ausgebildet und legen sich gegen die ebenfalls geneigten, ortsfesten Führungsschienen des Plattenbandförderers. Der Neigungswinkel ist dabei so gewählt, daß sich die Plattenglieder im Kurvenbereich nicht nach oben abheben können. Bei rechtwinkligen Führungsschienen und senkrecht zur Plattenebene angeordneten Führungsflächen ist es bekannt, dem Abheben des Plattenbandförderers dadurch entgegenzuwirken, daß rechtwinklig nach außen abgewinkelte Führungslappen der Führungsflächen die Schienen untergreifen.

Weiterhin ist es durch die deutsche Auslegeschrift 22 37 600 bekanntgeworden, die zum Führen an ortsfesten Gleitleisten bzw. -schienen dienenden Führungsflächen eines Plattengliedes aus im wesentlichen senkrecht zum Plattenglied nach unten abgebogenen Lappen herzustellen. Das Plattenglied und die Führungsflächen bestehen dabei aus einem einstückigen Blechzuschnitt, wobei die Biegekanten der Führungsflächen innerhalb der Fläche des Plattengliedes liegen. Die bekannten Plattenbandförderer besitzen jedoch den Nachteil, daß sich im Betrieb zu Bruch gehendes Transportgut, wie beispielsweise Glasbruch, zwischen den Plattengliedern festsetzen und Beschädigungen hervorrufen kann.

Ein weiterer Nachteil der Plattenbandförderer mit angeschweißten Führungsflächen bzw. -lappen besteht darin, daß das Anschweißen zweier einzelner auch L-förmiger Führungslappen ein sorgfältiges Positionieren erfordert und aufwendig ist. Dieser Aufwand läßt sich zwar bei der Verwendung eines aus zwei über einen Steg miteinander verbundenen Führungsflächen bestehenden U-förmigen Führungsschuhs vermeiden. Damit ist jedoch der Nachteil verbunden, daß es beim Verschweißen des Führungsschuhs mit dem Plattenglied infolge der hohen Wärmebeanspruchung und einer unterschiedlichen Wärmedehnung von Platte und Führungsschuh zu Verwerfungen der Platte kommen kann. Das führt zu einer labilen Lage des Transportguts und insbesondere beim Transport von Flaschen zu einer erhöhten Geräuschbelästigung.

Diesen Nachteil vermeidet zwar ein aus der deutschen Offenlegungsschrift 30 46 568 bekannter kurvengängiger Plattenbandförderer, bei dem die beiden Führungsflächen jeweils einzeln durch Schweißen fest mit den Scharnieraugen verbunden sind. Dies erfordert jedoch eine aufwendige Bearbeitung der außenliegenden Scharnieraugen-Stirnflächen, um dort Richtungs- und Maßabweichungen zu beseitigen und die Stirnflächen parallel zueinander sowie zu den Führungsflächen der Schienen auszurichten. Darüber hinaus ist es bei der Montage äußerst schwierig, die verhältnismäßig kleinen Führungsflächen in die vorgesehene Lage an den Scharnieraugenaußenseiten zu bringen und dort hinreichend sicher zu verschweißen.

Der Erfindung liegt die Aufgabe zugrunde, einen Plattenbandförderer der eingangs genannten Art mit verbesserten Eigenschaften zu schaffen, dessen Betriebsverhalten zu verbessern und das Anschweißen der Führungsflächen zu erleichtern.

Diese Aufgabe wird erfindungsgemäß durch einen Plattenbandförderer gelöst, bei dem die Führungsflächen, bezogen auf die Förderrichtung außermittig angeordnet sind und die Schweißpunkte des Stegs und der Führungsflächen an den Plattengliedern zueinander versetzt sind oder der Steg zwischen Schweißpunkten zumindest eine Kerbe aufweist.

Die Führungsflächen sind in dem von den beiden durch die Scharnieraugen der einander gegenüberliegenden Seitenkanten eines Plattengliedes verlaufenden Mittenachsen definierten Freiraum so angeordnet, daß die Entfernung bis zur vorderen Seitenkante geringer als die bis zur hinteren Seitenkante ist. Es ergibt sich somit ein großer, freier Raum bzw. eine Lücke zwischen dem an der hinteren Seitenkante mittig angeordneten Scharnierauge und den dieser Seitenkante zugewandten Stirnkanten der Führungsflächen. Auf diese Weise ist die Gefahr des Einklemmens von beispielsweise Glasbruch zwischen den Führungsflächen verringert, und außerdem tritt ein Selbstreinigungseffekt des Plattenbandförderers auf, denn unter die Plattenglieder gelangende Material-Bruchstücke können über die großen Lücken entweichen und herunterfallen.

Die Führungsflächen lassen sich mit Hilfe des Stegs ohne die Gefahr eines Verziehens am Plattenglied anschweißen, wobei sie bevorzugt außermittig an dem Verbindungssteg angeschweißt sind. Die Plattenglieder können auf diese Weise einfach mit vorgefertigten Führungsschuhen versehen werden, die aus dem Verbindungssteg und daran bereits außermittig angeschweißten Führungsflächen bestehen.

Die außermittige Anordnung der Führungsflächen am Verbindungssteg erlaubt es, daß die Schweißpunkte des Verbindungssteges und der Führungsflächen zueinander versetzt angeordnet sein können, d.h. die den Verbindungssteg und die Führungsflächen am Plattenglied festlegenden Schweißpunkte brauchen dann nicht auf einer geraden Verbindungslinie zu liegen. Damit läßt sich ein Verziehen des Plattengliedes beim Anschweißen der Führungsflächen vermeiden und eine ebene Förder- bzw. Tragfläche erzielen. Außerdem stellt sich aufgrund der versetzten Schweißpunkte eine höhere Scherfestigkeit der Führung ein.

Alternativ läßt sich der Verbindungssteg auch zwischen zwei Schweißpunkten mit zumindest einer Kerbe versehen. In diesem Fall gleicht die sich quer über den Steg erstreckende Kerbe einen Verzug beim Erkalten des Plattengliedes aus.

Die Erfindung wird nachfolgend von in der Zeichnung dargestellten Ausführungsbeispielen des näheren erläutert. Es zeigen:
- Fig. 1: eine Ansicht von unten auf zwei miteinander verbundene, erfindungsgemäß außermittig angeordnete Führungsflächen aufweisende Plattenglieder,
- Fig. 2: die in die Zeichenebene geklappten Plattenglieder gemäß Fig. 1 in der Seitenansicht,
- Fig. 3: einen Schnitt entlang der Linie III-III von Fig. 1 bei in die Zeichenebene geklappten Plattengliedern,
- Fig. 4: eine Ansicht von unten auf ein erfindungsgemäß außermittig angeordnete Führungsflächen aufweisendes Plattenglied, bei dem die Führungsflächen abweichend von der Ausführung gemäß den Fig. 1 bis 3 nach außen geneigt sind,
- Fig. 5: das in die Zeichenebene geklappte Plattenglied gemäß Fig. 4 in der Seitenansicht,
- Fig. 6: einen Schnitt entlang der Linie VI-VI von Fig. 4 bei in die Zeichenebene geklapptem Plattenglied,
- Fig. 7: eine der Fig. 1 entsprechende Ansicht eines Plattengliedes, das zwischen zwei Schweißpunkten des Verbindungssteges mit einer Kerbe versehen ist, und
- Fig. 8: eine der Fig. 4 entsprechende Ansicht eines Plattengliedes, das zwischen zwei Schweißpunkten des Verbindungssteges mit einer Kerbe versehen ist.

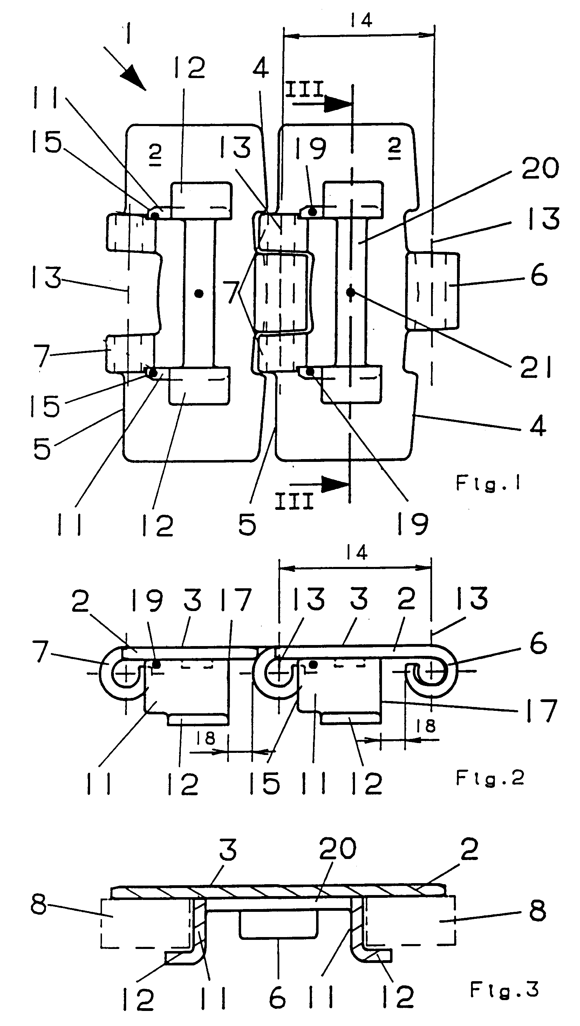

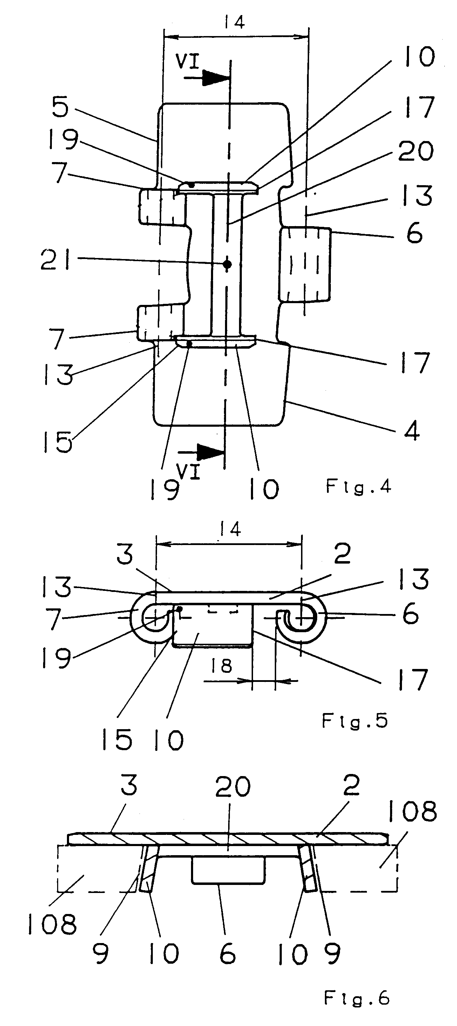

Ein kurvengängiger Plattenbandförderer 1 dient häufig zum Fördern von Flaschen und Behältern verschiedener Typen in Industrieanlagen und zum Handhaben von Nahrungsmitteln und Flüssigkeiten in Verpackungsanlagen. Der Plattenbandförderer 1 besteht aus hintereinander angeordneten Plattengliedern 2, die eine flache Tragfläche 3 (vgl. Fig. 2 und 5) für das Transportgut bilden. Die Plattenglieder 2 bestehen aus einem flachen Mittelteil, dessen eine, hintere Seitenkante 4 ein mittiges Scharnierauge 6 und die gegenüberliegende, vordere Seitenkante 5 (Doppelscharnieraugen-Seitenkante) zwei mit Abstand voneinander angeordnete Scharnieraugen 7 aufweist. Das mittige Scharnierauge 6 greift in den Zwischenraum der Scharnieraugen 7 des benachbarten Plattengliedes ein und ist mit diesem durch einen nicht dargestellten Scharnierbolzen drehbar verbunden. Die mittigen Scharnieraugen 6 sind so ausgebildet, daß sie ein seitliches Verschwenken der einzelnen Plattenglieder 2 erlauben.

Bei derartigen kurvengängigen Plattenbandförderern 1 wird das Plattengliederband in einer ortsfesten Führungsbahn geführt, die aus zwei einander gegenüberliegenden Führungsschienen 8 (Fig. 3) bzw. 108 (Fig. 6) besteht. Während die Schienen 8 rechtwinklig sind, besitzen die Führungsschienen 108 jeweils innenliegende Schrägflächen 9, die mit korrespondierenden, ebenfalls geneigten Führungsflächen 10 des Plattengliedes 2 zusammenwirken (vgl. Fig. 6) und das Gliederband in einer horizontalen Ebene halten und in Kurven führen. Bei der Ausführung gemäß Fig. 3 mit in rechtwinkligen Schienen 8 geführten Plattengliedern 2 besitzt jedes Plattenglied sich im wesentlichen vertikal nach unten erstreckende Führungsflächen 11 mit rechtwinklig nach außen abgewinkelten, die Führungsschienen 8 untergreifenden Führungslappen 12 zum seitlichen und horizontalen Führen an den Führungsschienen 8.

Die Führungsflächen 10 bzw. 11 sind in Förderrichtung bzw. in dem von den beiden durch die Scharnieraugen 6,7 der einander gegenüberliegenden Seitenkanten 4,5 eines Plattengliedes 2 verlaufenden Mittenachsen 13 definierten Freiraum 14 außermittig angeordnet. Dabei sind sie derart außermittig angeordnet, daß sich ihre der vorderen Seitenkante 5 des Plattengliedes 2 zugewandten Stirnkanten 15 in einem geringen Abstand von den Scharnieraugen 7 befinden. Die gegenüberliegenden, der hinteren Seitenkante 4 des Plattengliedes zugewandten Stirnkanten 17 der Führungsflächen 10,11 befinden sich hingegen in einem größeren Abstand von den mittigen Scharnieraugen 6, und es entsteht so ein großer Freiraum 18 jeweils zwischen den Stirnkanten 17 und der Außenfläche des nach innen eingerollten Scharnierauges 6 (vgl. Fig. 2 und Fig. 5).

Die Führungsflächen 10,11 sind mittels Schweißpunkten 19 unten am Plattenglied 2 angeschweißt und über einen Verbindungssteg 20 miteinander verbunden; so lassen sich die Plattenglieder 2 mit vorgefertigten, C-förmigen Führungsschuhen versehen. Die Führungsschuhe bestehen somit jeweils aus zwei durch einen mit zumindest einem Schweißpunkt 21 an die Plattenglied-Unterseite anschweißbaren Verbindungssteg 20 miteinander verbundenen Führungsflachen 10 bzw. 11, wobei die Führungsflächen 10,11 bereits außermittig mit dem Verbindungssteg 20 verschweißt sind.

Die den Verbindungssteg 20 und die Führungsflächen 10 bzw. 11 an das Plattenglied 2 festlegenden Schweißpunkte 19,21 sind bei den Plattengliedern 2 gemäß den Fig. 1 und 4 versetzt zueinander angeordnet, d.h. sie verlaufen nicht auf einer Linie bzw. in einer Flucht. Es liegen nämlich die die Führungsflächen 10,11 an das Plattenglied 2 festlegenden Schweißpunkte 19 im Bereich der vom Verbindungssteg 20 weiter entfernten Stirnkanten 15, während der Schweißpunkt 21 etwa in der Mitte des Verbindungssteges 20 angeordnet ist. Beim Anschweißen des Verbindungssteges 20 mit den Führungsflächen 10 bzw. 11 an das Plattenglied 2 wird aufgrund der versetzten Schweißpunkte 19,21 ein Verziehen der Tragfläche 3 verhindert.

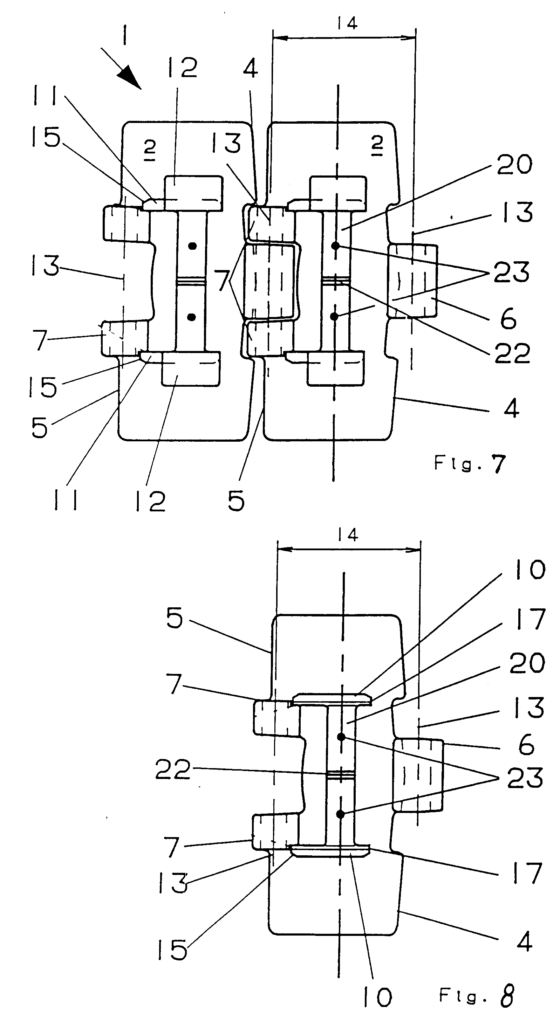

Bei der Ausführung gemäß den Fig. 7 und 8 sind die Verbindungsstege 20 an das Plattenglied 2 festgeschweißt. Zwischen den beiden Schweißpunkten ist der Steg 20 mit einer Quer-Kerbe 22 versehen, die einen möglichen Schweißverzug beim Erkalten ausgleicht.

## Patentansprüche

1. Kurvengängiger Plattenbandförderer aus mehreren, an ihren benachbarten Seitenkanten mit Scharnieraugen ineinandergreifenden und durch Scharnierbolzen miteinander verbundenen Plattengliedern, die mit Führungsschienen zusammenwirkende, und über einen Steg miteinander verbundene Führungsflächen aufweisen, dadurch gekennzeichnet, daß die Führungsflächen (11,12) bezogen auf die Förderrichtung außermittig angeordnet sind und die Schweißpunkte (19,21) des Steges (20) und der Führungsflächen (10,11) auf dem Plattenglied (2) zueinander versetzt sind oder der Verbindungssteg (20) zwischen Schweißpunkten (23) zumindest eine Kerbe (22) aufweist.

2. Plattenbandförderer nach Anspruch 1, dadurch gekennzeichnet, daß die Führungsflächen (10,11) außermittig an einem Verbindungssteg (20) angeschweißt sind.

3. Plattenbandförderer nach Anspruch 1 oder 2, gekennzeichnet durch geneigte Führungsflächen (10) und korrespondierende Schrägflächen (9) der Führungsschiene (108).

4. Plattenbandförderer nach einem oder mehreren der Ansprüche 1 bis 3, dadurch gekennzeichnet, daß vertikal zur Plattenebene angeordnete Führungsflächen (11) mit rechtwinklig nach außen abgewinkelten Führungslappen (12) rechteckige Führungsschienen (8) untergreifen.

## Claims

1. A curved-track apron conveyor comprising a plurality of plate members that, at their neighbouring side edges, engage with one another with hinge eyes and are connected to one another by hinge pins, and that have guiding surfaces that cooperate with guide rails and are connected together by means of a web or crosspiece, characterised in that the guiding surfaces (11, 12) are arranged off-centre with respect to the conveying direction and that either the spot welds (19, 21) of the web (20) and the guiding surfaces (10, 11) to the plate member (2) are disposed offset to one another, or else the connecting web (20) has at least one notch (22) between spot welds (23).

2. An apron conveyor according to claim 1, characterised in that the guiding surfaces (10, 11) are welded off-centre on to a connecting web (20).

3. An apron conveyor according to claim 1 or claim 2, characterised by inclined guiding surfaces (10) and corresponding sloping surfaces (9) of the guide rails (108).

4. An apron conveyor according to one or more of claims 1 to 3, characterised in that guiding surfaces (11) arranged perpendicular to the plane of the plates engage under rectangular guide rails (8) with guide tongues (12) bent outwards at right angles.

## Revendications

1. Transporteur à palettes pour trajet en courbes, constitué de palettes s'engageant les unes dans les autres sur leurs bords latéraux voisins par des yeux de charnière et mutuellement assemblées par des boulons de charnière, palettes qui présentent des faces de guidage coopérant avec des glissières de guidage et mutuellement reliées par une entretoise, **caractérisé** en ce que les faces de guidage (10, 11) sont disposées en position excentrée par rapport à la direction de transport, et les points de soudage (19, 21) de l'entretoise (20) et des faces de guidage (10, 11) sur la palette (2) sont mutuellement décalés ou bien l'entretoise (20) présente au moins une entaille (22) entre des points de soudage (23).

2. Transporteur à palettes selon la revendication 1, **caractérisé** en ce que les faces de guidage (10, 11) sont soudées en position excentrée sur une entretoise (20).

3. Transporteur à palettes selon la revendication 1 ou 2, **caractérisé** par des faces de guidage inclinées (10) et des faces obliques correspondantes (9) des glissières de guidage (108).

4. Transporteur à palettes selon une ou plusieurs des revendications 1 à 3, **caractérisé** en ce que des faces de guidage (11) disposées perpendiculairement au plan de la palette s'engagent sous des glissières de guidage rectangulaires (8) par des pattes de guidage (12) coudées à angle droit vers l'extérieur.
